# EUROPEAN PATENT SPECIFICATION

(11) **EP 3 428 440 B1**
(45) Date of publication and mention of the grant of the patent: **29.09.2021**
(21) Application number: 18183560.4
(22) Date of filing: 13.07.2018
(51) Int. Cl.: F02M 26/06, F02M 26/14, F01N 3/20, F01N 3/08, F01N 9/00, F01N 3/032, F01N 13/00, F01N 3/031, F02D 41/00, F02D 41/40, F02M 26/05, F02M 26/15, F01N 3/10, F02D 41/14, F01N 3/025, F01N 3/035, F02M 26/00, F02D 41/02

(54) **POLLUTANT ABATEMENT SYSTEM FOR AN INTERNAL COMBUSTION ENGINE AND INTERNAL COMBUSTION ENGINE COMPRISING SAID ABATEMENT SYSTEM.**
ABGASNACHBEHANDLUNGSSYSTEM EINER BRENNKRAFTMASCHINE UND BRENNKRAFTMASCHINE MIT SOLCHEM ABGASNACHBEHANDLUNGSSYSTEM.
SYSTÈME D'ÉPURATION DE GAZ D'ÉCHAPPEMENT D'UN MOTEUR À COMBUSTION INTERNE ET MOTEUR AVEC UN TEL SYSTÈME D'ÉPURATION.

(30) Priority: 13.07.2017 IT 201700079332; 04.09.2017 IT 201700098874; 31.10.2017 IT 201700124352
(43) Date of publication of application: 16.01.2019
(73) Proprietor: FPT Industrial S.p.A., 10156 Torino (IT)
(72) Inventor: D'EPIRO, Clino, 10091 Alpignano (TO) (IT)
(74) Representative: Studio Torta S.p.A.

(56) References cited:
- DE-A1-102014 223 491
- US-A- 5 806 308
- US-A1- 2011 041 483
- US-A1- 2011 219 755
- US-B1- 6 779 339
- US-B2- 8 388 712

## Description

### Technical field of the invention

The invention relates to the field of the so-called exhaust gas after-treatment systems of an internal combustion engine.

"Pollutants abatement systems" and "pollutants treatment systems" are equivalent expressions.

### State of the art

The regulations concerning harmful emissions of terrestrial vehicles are becoming more and more restrictive and, therefore, it is necessary to identify single devices or sets of devices connected to one another which are capable of reducing pollutants emissions.

### Devices like

DPF = Diesel particulate filter,
NSC = NOx trap, which converts NO into NO₂ and stores it until N02 needs to be reduced, at first, to NO and then to N2 by means of a so-called regenerative process, which must be carried out in an atmosphere without oxygen and rich in HC, it generally comprises rhodium;
PNA = Passive NOx adsorber, which means a device exclusively capable of storing and releasing NOx with no ability to convert it into JAB, unlike an NSC; further details on PNAs are described in US20130294990; a PNA is incapable of any NOx conversion.

Even though there are substantial differences between PNA and NSC, they are both part of the family of NOx traps, generally called LNT (Lean NOxtrap).
DOC = Diesel oxidation catalyst,
SCR = selective catalytic converter, which exploits the presence of ammonia to reduce NOx contained in exhaust gases,
CUC = ammonia reducer, which is generally used as last component of the ATS in order to avoid releasing ammonia into the atmosphere, for it would help increase the amount of pollutants introduced into the atmosphere.

They are well known to a person skilled in the art and the respective abbreviations are acronyms of known English expressions.

They are generally used in Diesel engines.

Three-way catalysts, on the other hand, are universally known in the world of Otto engines, namely spark-ignition engines.

Diesel engines are usually provided with the aforesaid Diesel particulate filters (DPF). They are capable of storing particulate matter with dimensions exceeding PM10. During regenerations, however, the particular matter decreases in size becoming PM5 and less and, therefore, it is released into the atmosphere. This is one of the reasons why Diesel engines are going to be banned. In other words, DPFs reduce the total quantity by weight of particulate matter released into the atmosphere even by 98%, but they find it hard to stop finer particulate matter, which is also more dangerous for human health. Furthermore, experimental studies have shown that 80% of the 2% that is not stopped is actually emitted during the periodic combustion process (regeneration) of the stored particulate matter.

US2011041483A1 and US5806308A disclose respective examples of known pollutant abatement systems. US2011041483A1, particularly, discloses a system for the abatement of pollutants produced by an internal combustion engine with all the features in the preamble of appended claim 1.

### Summary of the invention

An object of the invention is to improve the performances in terms of pollutants abatement of an ATS based on a Diesel particulate filter.

The idea on which the invention is based is that of implementing a first ATS portion comprising a Diesel particulate trap and of connecting, during the emptying/regeneration of the Diesel particulate trap, the outlet of the first ATS to the inlet of the internal combustion engine, so as to redirect all released suspended particulate matter to the internal combustion engine. Therefore, the internal combustion engine acts like an abatement device, thorough combustion, for the suspended particulate matter released during the regeneration of the DPF.

During the regeneration of the DPF, a fraction of the exhaust gases produced by the internal combustion engine is directed, in a direct manner through a bypass duct bypassing the first ATS portion, to the atmosphere or to a second ATS portion.

Hence, this exhaust gas fraction is directed to the second ATS portion, if available, in a direct fashion, i.e. without going through the first ATS portion.

According to a preferred variant of the invention, the first ATS portion also houses an NOx trap, namely a PNA or an NSC.

The simultaneous presence of a Diesel particulate filter and of an NOx trap allows manufacturers to coordinate the regeneration/emptying of the NOx trap with the regeneration of the Diesel particulate filter, using the internal combustion engine like an afterburner.

When the NOx trap is an NSC and is arranged upstream of the Diesel particulate filter, the regeneration products produced by the NSC help increase the temperature of the Diesel particulate filter.

Advantageously, the high temperature reached in the first portion of the ATS, during the regeneration condition, allows for the production of the aforesaid CO, HC, H2 and NH3 species, which represent what is usually called "reforming" of the fuel, though operated, according to the invention, by means of the NSC, therefore the NSC acts like a reformer of the fuel which ends its combustion, in the presence of residual oxygen, in the Diesel particulate filter and then in the internal combustion engine.

As it is known, fuel reforming significantly reduces the production of NOx by the internal combustion engine and, therefore, the exhaust gas fraction possibly released into the atmosphere by means of the bypass duct is substantially poor in NOx.

This implies that a possible second portion of the ATS can only comprise a DOC or a CUC to at least reduce unburned hydrocarbons, which would otherwise be released during the regeneration of the first ATS portion.

When the NOX trap is a PNA and is arranged upstream of the Diesel particulate filter, the impulsive release of NOx allows for a very extreme natural regeneration of the Diesel particulate filter, which proceeds the regeneration forced through heating, with extremely reduced high-temperature regeneration times.

Another object of the invention is to reach a higher degree of flexibility in the production of the ATS, improving the distribution of thermal flows inside the ATS, so as to make it more flexible.

Preferably, the first ATS portion consists of one single canning capable of allowing for an immediate adjustment of the ATS to the specific regulations of the destination market and a better thermal distribution through the treatment cores. It is shaped like a right prism and, therefore, has an axial development with a triangular, rectangular, square, but preferably circular cross section. The bases are preferably closed by means of a first and a second dome. It comprises at least two treatment cores: a first and a second core, each arranged transversally with respect to the development axis of the scanning and separated by a separation wall, so that the first core is adjacent to the first dome in order to be interposed between the first dome and the separation wall. An inlet chamber is defined between the first core and the separation wall. The device comprises at least one side inlet, which establishes a communication between the outside and said inlet chamber, and an outlet, preferably a single axial outlet associated with the second dome. A central pipe extends from the first dome and goes through said first core and said separation wall, thus establishing a communication, in operation, between a volume defined in the first dome and the second dome. Therefore, the first core is annularly distributed with respect to said central pipe, whereas the second core occupies the entire transverse extension of the canning, as it is not crossed by the central pipe.

According to the description above, the exhaust gas is introduced into the device from the inlet, forced to flow through the first core, collected in the first dome and conveyed to the second core through the central pipe. From here, the exhaust gas is collected in the dome, which directs it to the outlet.

A third core can be interposed between the second core and the second dome or between the first core and the first core.

The inlet opening can be single and radially or tangentially oriented or it may have an intermediate inclination between tangential and radial, allowing for an improved filling of the inlet chamber, creating a circumferential flow around the central pipe portion arranged in the inlet chamber.

There can be different inlet openings, which lead into the same inlet chamber and are angularly staggered with respect to the first one.

Advantageously, part of the heat is transported by the exhaust gas towards the first dome through the first core, whereas part of the heat is released to the central pipe portion located in the inlet chamber so as to heat the exhaust gas flowing through it, so that this portion of heat is directly transported to the second core.

Advantageously, even though the first and the second core are in series in terms of exhaust gas circulation, they are in parallel from a thermal point of view, as part of the heat is directly released to the second core releasing heat to the central pipe which conveys the gas already circulated in the first core and directed towards the second core.

In order to support the heat exchange, the central pipe portion arranged in the inlet chamber can be provided with a finning on the outside and, optionally, on the inside of the pipe.

A preferred variant of the invention envisages the arrangement of an injector to inject a urea-based reducing agent into the first dome.

When a urea-based reducing agent injector is installed in the first dome, the drops of urea-based reducing agent hit the inner wall of the central pipe and cannot crystallize as an intermediate portion of said central pipe is the hottest point of the entire device.

Indeed, the exhaust gas produced by the engine, which is hence hotter, gets into the inlet chamber having an annular shape, with the central wall consisting in said central pipe, thus heating it.

Preferably, a turbulator is arranged inside the central pipe, in place of or in combination with said internal finning, at least partially in the area of said inlet chamber. This is particularly advantageous since the heat acquired by the central pipe in the inlet chamber is transmitted to the turbulator, which vaporizes any drop of urea-based reducing agent that might reach the turbulator. A turbulator consists of a static mixer, for example provided with fins inclined in different ways so as to determine a turbulent flow in the exhaust gas.

Therefore, according to the invention, the first dome, a volume enclosed by the first dome, the first core, the inlet chamber, the separation wall, preferably a compensation chamber axially delimited by said separation wall and by the second core, the second core and the second dome are axially aligned in succession.

A preferred variant of the invention envisages the arrangement of a fuel injector in the inlet pipe so as to obtain the regeneration of the Diesel particular filter and, when available, of the NOx trap.

According to a preferred variant of the invention, the device according to the invention only defines a first ATS portion and there are means allowing for a connection between the outlet of the device and the inlet of the internal combustion engine, so as to redirect all regeneration products of the first ATS portion to the internal combustion engine, which acts like an abatement device reducing the regeneration products of the first ATS portion.

Preferably, the first ATS portion can implement DPF or C-DPF preferably in combination with an NSC or a PNA.

When an NSC is also implemented, downstream thereof there can be arranged a passive SCR in order to exploit the ammonia generated by the NSC during the relative regeneration.

According to a preferred variant of the invention, a third treatment portion including at least a DOC is arranged upstream of the bypass duct and of the first treatment portion.

The presence of the third treatment portion does not imply the presence of the second treatment portion downstream of the aforesaid bypass.

Advantageously, since the entire exhaust gas flow circulated through the DPF and, possibly, the NOx trap is recirculated to the intake of the internal combustion engine, there is no risk of releasing regeneration products into the atmosphere.

These regeneration products comprise, among others: H2, CO, HC, NH3 and the aforesaid N02, which, as already mentioned above, are released impulsively. They further comprise the residual particulate matter, typically PM2.5 and PM5, of the DPF regeneration, which is also released impulsively. An important advantage lies in the fact that the extra consumption of fuel injected through the fuel dosing device, as said regeneration products are almost all fuels in different forms, can be almost completely compensated with a decrease in the fuel injected into the cylinders of the internal combustion engine in order to supply the internal combustion engine itself. Therefore, the fuel consumption balance remains unchanged or changes to a small extent.

Advantageously, the presence of a bypass duct permits a chocking of the flow flowing through the first treatment portion in regeneration condition, thus reducing the quantity of fuel to be injected.

The bypass duct is connected to the exhaust pipe in a first point, immediately upstream of the first treatment portion, and in a second point, downstream of the first treatment portion. The recirculation pipe leading to the intake manifold of the internal combustion engine is connected between said first treatment portion and said second point. Between said second and said third point, namely between the inlet of the recirculation pipe and the outlet of the bypass duct, according to the invention, there is a valve, which is adapted to insulate the first ATS portion from the outside and, at the same time, to allow the exhaust gas to flow through the bypass duct.

This valve preferably is an ON/OFF two-way valve.

Therefore, in regeneration conditions, a first exhaust gas portion is recirculated towards the internal combustion engine through the DPF, whereas a second portion is directed to the outside, without flowing through said first portion of the ATS, through said bypass duct.

According to a first operating condition, i.e. a normal operating condition, of the first ATS portion, the dosing device is closed and the valve downstream of the first ATS portion is arranged so as to direct the exhaust gas that has flown through the first treatment portion towards the outside.

According to a second operating condition, i.e. a regeneration operating condition, the fuel dosing device is in operation and the valve downstream of the first treatment portion is arranged so as to insulate the relative first treatment portion from the outside, operating at the same time the bypass duct.

It is evident that said fuel dosing device is completely independent of the injectors with which the relative internal combustion is provided in order to operate. Advantageously, only a fraction of the exhaust gases flows through the first treatment portion during a relative regeneration. This exhaust gas fraction represents a carrier means to transport the fuel injected by the dosing device by means of after-injections in order to obtain the regeneration of the first ATS portion and the share of fuel needed to burn the oxygen content thereof is accordingly reduced in the same proportion of the gas flowrate. According to preferred implementations of the invention, said first portion of the ATS can be arranged upstream or downstream of the turbine of the turbocharger of the internal combustion engine and, therefore, the recirculation pipe is connected upstream or downstream, respectively, of the compressor of the turbocharger, thus defining a high-pressure or low-pressure EGR pipe, respectively.

Nevertheless, there can be an additional high-pressure or low-pressure EGR device provided with a "further" adjustment valve of its own, which is controlled in a complementary manner with the adjustment valve of the recirculation pipe described above through all the preceding variants of the invention in order to reach a predetermined EGR target, regardless of the operating conditions of the ATS: normal operation or regeneration.

According to a further preferred variant of the invention, said further high-pressure EGR device is obtained by means of a so-called "donor cylinder", which, considered as such, is known. The exhaust manifold of said donor cylinder is connected to the intake pipe of the internal combustion engine so as to create a constant high-pressure EGR device, which is definitely useful because it allows the aforesaid adjustment valve to be controlled with greater freedom during the NSC regeneration phase. In other words, the exhaust gas fraction flowing through the NSC can be limited to very small values, even when a much greater EGR target is requested, namely during regenerations operated with a small load of the engine.

The subject-matter of the invention is a pollutants abatement system (ATS) of an internal combustion engine according to claim 1.

A further subject-matter of the invention is a pollutants abatement device for an internal combustion engine.

A further subject-matter of the invention is an internal combustion engine comprising the aforesaid abatement system and a vehicle comprising said internal combustion engine said system for the abatement of the pollutants produced by the internal combustion engine.

The dependent claims show preferred variants of the invention, thus forming an integral part of the description.

### Brief description of the figures

Further objects and advantages of the invention will be best understood upon perusal of the following detailed description of an embodiment thereof (and of relative variants) with reference to the accompanying drawings merely showing non-limiting examples, wherein:
figure 1 schematically shows a first preferred variant of an abatement system according to the invention;
figures 2a - 2e show examples concerning a detail of the diagram of figure 1, according to preferred variants of the invention;
figure 3 shows a further diagram of the system according to the invention, wherein there is a further component compared to the diagram of figure 1;
figure 4 shows a further variant of a part of the diagram of figures 1 and 3;

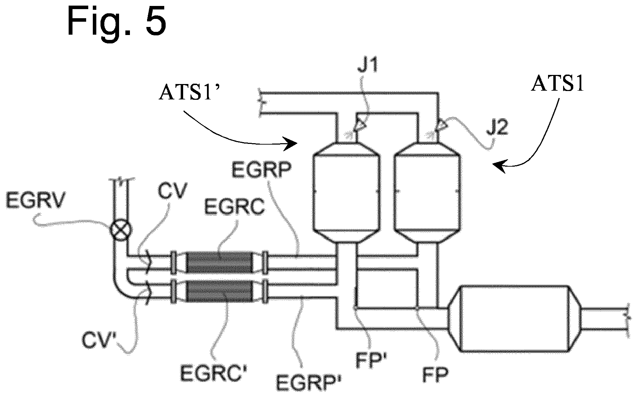

figure 5 shows a further diagram of the system comprising two first treatment portions arranged in parallel with respect to one another;
figure 6 shows a first diagram based on the one of the preceding figures, wherein a further detail is shown concerning an internal combustion engine with which the abatement system of the preceding figures is going to be associated;
figures 7 and 8 show manufacturing examples of a component according to the preceding figures.

In the figures, the same numbers and the same reference letters indicate the same elements or components. "Upstream" or "downstream" must be interpreted in relation to the circulation of exhaust gas, if dealing with the ATS, or to the circulation of fresh air getting into the internal combustion engine, if dealing with the intake manifold of the internal combustion engine.

For the purposes of the invention, the term "second" component does not imply the presence of a "first" component. As a matter of fact, these terms are only used for greater clarity and should not be interpreted in a limiting manner.

### Detailed description of embodiments

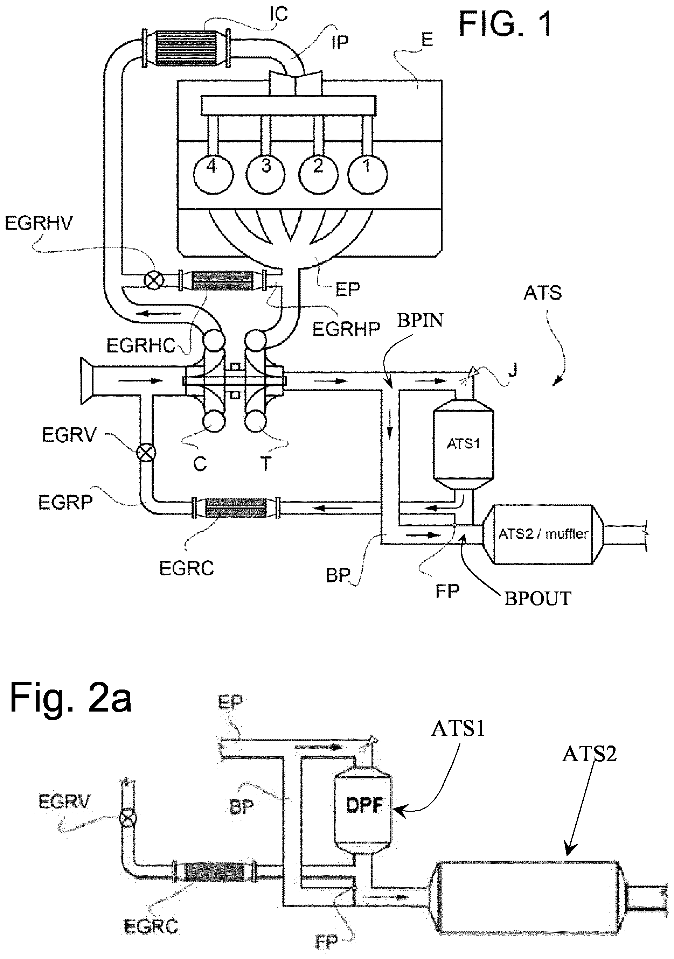

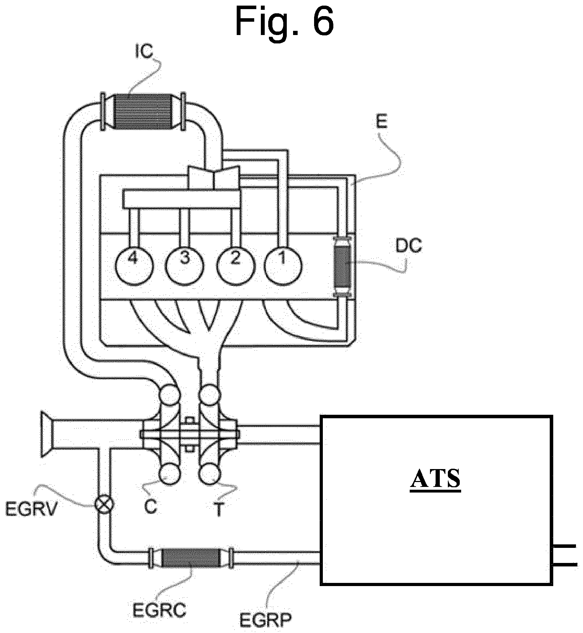

The invention relates to the field of internal combustion engines. Figures 1, 3 and 6 schematically show an internal combustion engine E comprising one or more cylinders 1 - 4 with relative injectors adapted to inject fuel into a relative cylinder during the compression stroke, as the internal combustion engine preferably is a Diesel engine. The engine comprises an intake pipe IP, through which fresh air is taken in from the outside, and an exhaust pipe EP, through which exhaust gases are released into the atmosphere.

An exhaust gas treatment device ATS is arranged on the exhaust pipe and comprises at least a first treatment portion ATS1 having at least an exhaust gas treatment device.

Said device is at least a Diesel particulate filter DPF. Said first treatment portion can also comprise further components, among which there are
- an NOx trap, called LNT, which can be an NSC or a PNA.
- an NOx converter, called SCR, which can be active, in case a urea-based reducing agent is injected, or passive, in case it is associated with an NSC arranged downstream of the SCR;
- a DOC.

According to the invention, the first portion ATS1 of the ATS comprises a bypass duct, which allows the first portion ATS1 to be at least partially bypassed.

In this way, the exhaust gas flow produced by the internal combustion engine can be divided into a first fraction flowing through ATS1 and a second fraction flowing through the bypass duct.

The ratios can change depending on the operating conditions. For example, when the engine is cold, the bypass is completely closed (see figures 2a - 2b) and the first exhaust gas fraction coincides with the entire gas flow produced by the internal combustion engine E.

In order to allow the second exhaust gas fraction to not flow through the ATS1, said bypass duct BP is arranged on the exhaust pipe and connects a first point BPIN, upstream of the first treatment portion ATS1, to a second point BPOUT, downstream of said first treatment portion ATS1 and upstream of an optional second portion ATS2, which helps define the ATS.

According to the invention, a circulation pipe EGRP connects a third point, arranged between the first treatment portion ATS1 and said second point. A second adjustment valve EGRV is optionally located on said circulation pipe EGRP.

The invention allows the PM2.5 released by the DPF and/or C-DPF during the relative regeneration to be recirculated in the internal combustion engine.

The second portion ATS2 of the ATS is completely optional and depends on what is housed in the first treatment portion. The second portion ATS2 of the ATS houses, for example, an SCR and - optionally - a CUC arranged downstream of the SCR, so as to neutralize the residual NOx released by the PNA and recirculated through the internal combustion engine.

Indeed, when an NSC is used as NOx trap, the main regeneration products are HC and NH3, the presence of a second treatment portion and, especially, of an SCR contained in it is completely optional, as these products are almost completely neutralized by recirculating in the internal combustion engine.

A first valve FP allows the bypass to be activated, in emptying condition, blocking the direct connection between the first treatment portion ATS1 and the second treatment portion ATS2 (see figure 1). By so doing, the first exhaust gas fraction is forced to entirely recirculate towards the inlet of the engine E, whereas the second exhaust gas fraction, through the bypass, reaches the second portion ATS2 and then the outside.

Vice versa, when the bypass is deactivated, namely in "normal" operating conditions of the ATS1, the recirculation pipe acts like any EGR device and the EGR fraction can be fixed and, for example, be the result of the ratio between the cross sections of the pipe. Alternatively and preferably, an adjustment valve EGRV is arranged on the recirculation pipe EGRP so as to adjust the EGR flow recirculated during the "normal" operation and adjust the flowrate of the first exhaust gas fraction and, hence of the second exhaust gas fraction of split between the ATS1 and the bypass duct BP.

Preferably, a cooler EGRC is arranged on the recirculation pipe.

In order to enable the heating an the release of NOx by the NOx trap, the injectors of the engine E can optionally be capable of carrying out after-injections in the relative cylinders, i.e. injections of fuel while the burnt mixture is being conveyed to the exhaust pipe. Alternatively, a fuel injector J can be arranged on the exhaust pipe, preferably between the inlet of the first treatment portion ATS1 and the inlet BPIN of the bypass duct BP, as shown in the figures.

As explained more in detail below, both techniques can be implemented simultaneously but with different effects. Alternatively, the fuel dosing device J can be arranged upstream of the inlet BPIN of the bypass duct. In this case, its effects affect both exhaust gas fractions equivalently to fuel after-injections.

When the bypass is active and the NOx trap of the ATS1 is controlled to release NOx or regenerate, said after-injections or said fuel injector J are active.

Vice versa, when the bypass is deactivated, the recirculation pipe acts like any other EGR device and the EGR fraction can be fixed and be the result of the ratio between the cross-sections of the pipes; alternatively and preferably, a second adjustment valve EGRV is arranged on the recirculation pipe EGRP so as to adjust the recirculated EGR flow.

When there is an SCR in an ATS2, once the activation temperature of the SCR is exceeded, after the complete emptying/regeneration of the NOx trap (LNT), the bypass can remain active and the NOx completely insulated for heavy duty applications or, for light duty applications, the bypass can be closed and the NOx trap and be reintroduced in the path of the exhaust gas flow, though not intervening in the treatment thereof.

Indeed, above given temperatures, both the PNA and the NSC are not capable of absorbing NOx and, therefore, they do not intervene in the treatment of the exhaust gases. However, due to the high temperatures at maximum load, this leads to the ageing thereof, which can be tolerated in light duty vehicles, but cannot be accepted in heavy duty vehicles.

Unfailingly, during the regeneration of a DPF, a large quantity of PM2.5 is released, which corresponds to a percentage of the mass of particulate matter previously stored in the filter. Namely, it derives from the combustion of larger particles, which reduce their dimensions until they can go through the porosity of the ceramic core.

Whereas the particulate matter reaching the ATS2 or the atmosphere through the bypass during regenerations mainly is PM10, which is much less harmful than PM2.5 and is released in very small quantities only during the regenerations of the ATS1, which last much less - "much less" meaning at least a 1:1000 factor - than the normal operating condition of the ATS1.

In order to carry out the aforesaid regeneration, a fuel injector J (J1, J2) is arranged on the exhaust pipe of the internal combustion engine upstream of the first ATS1 portion, preferably between said first point BPIN and the first treatment portion ATS1.

Fuel after-injections can be performed even when there is a dedicated injector J (J1, J2)J (J1, J2), but in order to carry out the pre-heating of the ATS1 in case of cold start, rather than in order to perform the regeneration of one of the cores of the ATS1.

The invention envisages chocking the exhaust gas flowing through the device D in such a way that a first portion goes through it and a second portion is directly led to the second treatment portion ATS2 or to the outside. It is evident that the sum of the first portion and of the second portion corresponds to the entire exhaust gas flow produced by the engine E.

This, according to a preferred variant of the invention, is obtained by means of the aforesaid bypass duct BP.

Furthermore, the first exhaust gas portion is entirely recirculated upstream of the engine E. In other words, a point downstream of the first portion ATS1 is directly connected to the intake pipe IP.

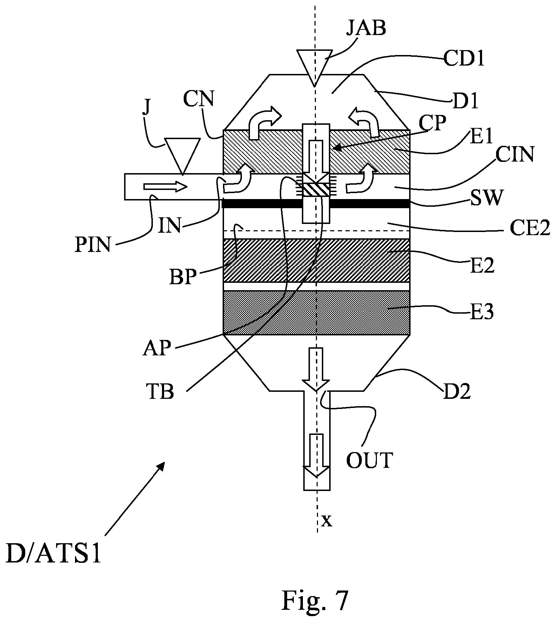

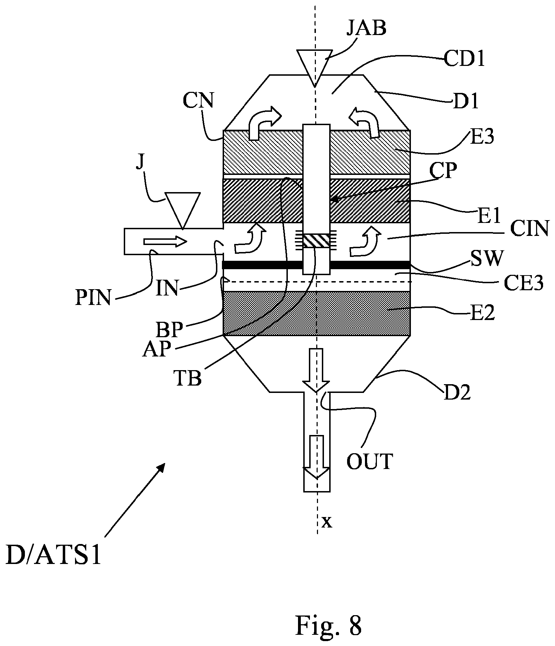

Figures 7 and 8 show an example of the device D specifically used to create the first treatment portion ATS1 of the abatement system according to the invention. It implements a modular device with one single canning capable of allowing for an optimal distribution of the heat between the cores making up the device itself.

It is shaped like a right prism and, therefore, has an axial development with a triangular, rectangular, square, but preferably circular cross section. The bases are preferably closed by means of a first dome D1 and a second dome D2. It comprises at least two treatment cores E1 and E2: a first treatment core E1 and a second treatment core E2, each arranged transversally with respect to the development axis X of the canning, in the sense that the cores are shaped so as to be complementary to the inner wall of the canning.

The first core E1 is adjacent to the first dome D1 and the second core E2 is adjacent to the second dome and to a separation wall SW, which axially divides the first and the second core.

The separation wall divides the volume of the canning CN into two parts communicating with one another through the central pipe CP.

An inlet chamber CIN is defined between the first core E1 and the separation wall SW. The device comprises a side inlet opening IN and an outlet OUT, preferably a single outlet arranged axially, which is associated with the second dome D2. The inlet opening IN opens in the inlet chamber CIN.

The central pipe CP develops from the first dome D1 up to at least the separation wall SW, thus establishing a communication, in operation, between a volume CD1 defined in the first dome D1 and the second core E2. Therefore, the first core E1 is distributed in an annular manner with respect to said central pipe AP and, evidently, the central pipe goes through the first core and the separation wall SW.

Evidently, the central pipe does not go though the second core, otherwise it would bypass it and, therefore, the central pipe is much shorter than the entire axial extension of the device.

Preferably, between the separation wall SW and the second core E2 there is a so-called "baffle plate" BP, which means a compensation plate that allows the exhaust gas flow conveyed by the central pipe to be distributed over the entire second core E2. In other words, said compensation plate radially expands the gas flow towards the periphery. Preferably, the central pipe portion going through the inlet chamber is provided with an external finning WE to improve the collection of heat by the exhaust gas getting into the chamber.

Furthermore, the central pipe preferably comprises a turbulator TB on the inside of the central pipe portion going through the inlet chamber.

According to the description above, the exhaust gas is introduced into the device from the inlet, forced to flow through the first core E1, collected in the first dome D1 and conveyed to the second core through the central pipe CP. From here, the exhaust gas is collected in the dome, which directs it to the outlet OUT, going through at least the second core.

A third core E3 can be interposed between the first core E1 and the dome D1, see figure 1a, or between the second core E2 and the second dome D1, see figure 1.

The two variants of figure 7 and 8 can be combined together, thus identifying a fourth core, so that a third core is interposed between the first core E1 and the dome D1 and a fourth core is interposed between the second core E2 and the second dome D2.

The inlet opening IN can be single and radially or tangentially oriented or it may have an intermediate inclination between tangential and radial, allowing for an improved filling of an inlet chamber, with an annular shape and axially delimited by said first core and by said separation wall, thus causing a swirl of the exhaust gas. The inclination of the inlet opening can be changed in order to help the exhaust gas hit the central pipe, so as to enable the heating of the exhaust gas flow reaching the cores downstream of the separation wall.

An injector JAB can be installed in the first dome in order to inject a urea-based reducing agent.

There can be different inlet openings, which lead to the same chamber and are angularly staggered with respect to the first one according to one of the angles described above.

Therefore, according to the invention, the following elements are geometrically aligned in succession
- the first dome,
- the volume enclosed by the dome CD1,
- the first core E1,
- the inlet chamber CIN,
- the separation wall SW,
- an optional compensation chamber CE2, which is axially delimited by said separation wall and by the second core E2,
- the second core E2,
- the second dome D2.

Evidently, the first core E1 is arranged upstream of the second core E2, the second core is arranged upstream of the third core.

"Upstream" or "downstream" must be interpreted in relation to the circulation of exhaust gas, if dealing with the ATS, or to the circulation of fresh air, if dealing with the intake pipe IP of the engine E.

According to a preferred variant of the invention, the inlet pipe PIN connected, in operation, to the side opening IN of the canning is associated with a fuel injector J (J1, J2), namely the same one used by the relative internal combustion engine.

Regardless of the specific variant, the first dome can be associated with a urea-based reducing agent injector JAB. Different cores can be installed inside the device.

With reference to figure 7, it is possible to identify a first configuration V1, in which E1 is defined by a DOC, E2 is defined by a DPF, E3 can be absent or, if it is present, it is defined by a further DPF.

The second injector JAB is not present, whereas the first injector J can be present in order to operate a forced regeneration of the DPF. It can be absent if the regeneration is carried out by means of so-called fuel after-injections in the cylinders of the engine during a relative exhaust phase.

Some variants V2 - V4 envisage the implementation of a NOx trap (LNT) and, therefore, said nozzle/dosing device J (J1, J2) associated with the external pipe, operatively connected to the inlet of the device D, turns out to be also necessary for the regeneration of the NSC.

The fuel injected by J (J1, J2) is the same fuel delivered to the internal combustion engine. Said fuel preferably is Diesel.

"Table 1" below indicates four possible configurations which can be obtained with the modular device according to the example of figure 1:

**Table 1**

| | **V1** | **V2** | **V3** | **V4** |
|---|---|---|---|---|
| J (J1, J2) | Yes/no | yes | Yes | Yes |
| JAB | - | - | yes | Yes |
| E1 | DOC | C-DPF | NSC | NSC |
| E2 | C-DPF | NSC | DPF | a-SCRoF |
| E3 | -/DPF | p-SCR | a-SCR | a-SCR |
| ATS2 | -/DOC/CUC | DOC/CUC | DOC/CUC | DOC/CUC |

All configuration examples include a Diesel particulate filter:
- DPF,
- cDPF, i.e. a loaded DPF, adapted to also act like a DOC,
- SCRoF, i.e. a Diesel particulate filter adapted to also act like a NOx reducer in the presence of ammonia.

The first preferred configuration of the device D is indicated with V1, the second one with V2, etc..

In the first configuration V1, already discussed above, the device represents the entire ATS of the internal combustion engine, therefore line ATS2 corresponds to "-". In other words, there cannot be a second portion (ATS2) of ATS. Alternatively, the second ATS portion is present and it consists of a DOC or an almost equivalent CUC. In this case, the second ATS portion simply is in series to and downstream of the first ATS portion.

The device D can comprise or not comprise the nozzle JAB to inject a urea-based agent into the volume CD1 of the first dome, the first core is defined by a DOC, etc., as already described above, for example in order to facilitate the regeneration of DPF filter. The terms "dosing device" and "nozzle" are herein used as synonyms.

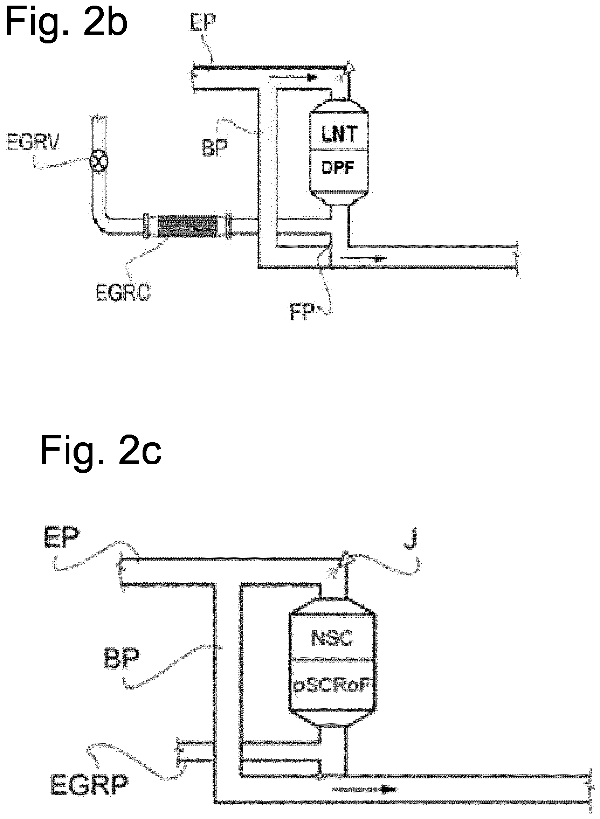

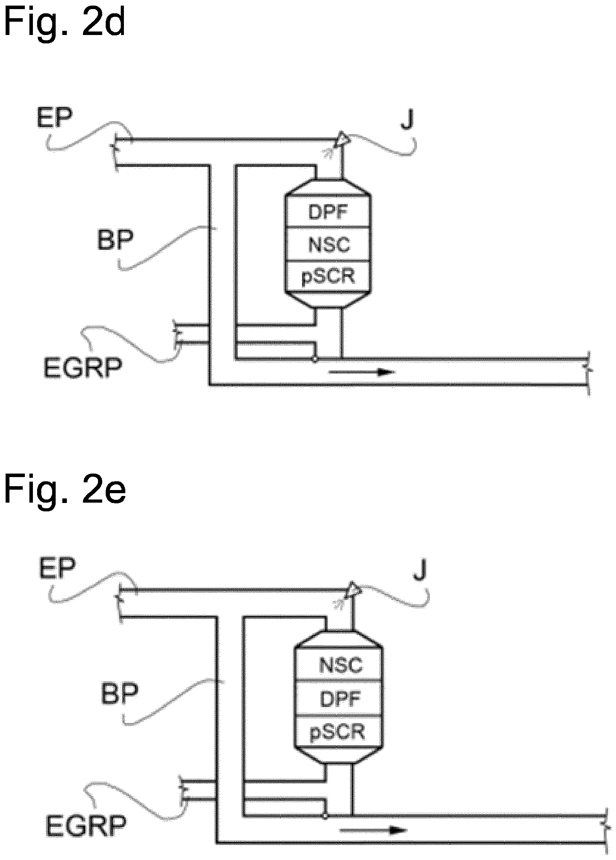

Configurations V1 - V4 are preferably, though not necessarily, implemented according to the diagram shown in figures 2 - 4.

Like it is shown in these figures, the device D according to the invention only defines a first portion of ATS, hence indicated with ATS1 in the figures, and there are recirculation means which allow the outlet of the device D to be connected to the inlet of the internal combustion engine E, so as to redirect all the products of the regeneration/emptying of the NOx trap and of the regeneration of the DPF or of the C-DPF to the internal combustion engine, during the regeneration of at least one of them.

Therefore, the internal combustion engine acts like a device for the abatement of the PM2.5 released during the regeneration of the DPF or C-DPF and, if necessary, of the products released by the possible NOx trap.

Downstream of the recirculation means there is a second device ATS2 defined by a DOC or a CUC.

A DOC and a CUC have a very similar core, the main difference lies in the Pt/Pa/Rd ratio to optimize the efficiency of the core for the different compounds, such as HC rather than ammonia; therefore, for the purpose of the invention, a DOC or a CUC arranged in the ATS2 are equivalent to one another.

Furthermore, there are bypass means EGRP, FP of the device D/ATS1, which allow an exhaust gas portion to directly reach the second device ATS2 so as to be finally released into the atmosphere.

Since the entire exhaust gas flow circulated through the first treatment portion ATS1 is recirculated to the intake of the internal combustion engine, there is no risk of releasing regeneration products into the atmosphere.

These regeneration products comprise, among others: H2, CO, HC, NH3 and the aforesaid N02, which, as already mentioned above, are impulsively released by the NSC. They further comprise PM2.5 and similar particles resulting from the regeneration of the DPF.

An NSC, as already mentioned above, is capable of absorbing NOx; in particular, it converts NO into N02 and stores it until N02 needs to be reduced, at first, to NO and then to N2 by means of a so-called regenerative process, which must be carried out in an atmosphere without oxygen and rich in HC,

The valve EGRV, in regeneration conditions, is preferably operated based on the regenerative process of the NSC rather than on the reduction of the NOx produced by the engine E. The latter, indeed, can also be reduced by acting upon other operating parameters of the internal combustion engine, such as
- injection times,
- whether the engine is provided with adjustable valve lift in intake and exhaust valve overlaps, for example creating an inner EGR.

According to configuration **V2,** the first core E1 is defined by a DPF filter loaded so as to also define a catalyst and, therefore, indicated with C-DPF. It consists of a DPF core with closed channels (wall flow), to which a charge of oxidising catalyst, typically platinum, is added.

The second core, on the other hand, is defined by the NSC and the third core E3 is defined by a passive SCR, which, therefore, is indicated with pSCR (or p-SCR).

The arragement of the DPF upstream of the NSC offers some advantages. Preferably, the core of the DPF is coated with an oxidising treatment, preferably a platinum-based one. During the normal operation of the ATS, the platinum-based coating allows for the oxidation of NO to N02 contained in the exhaust gases produced by the internal combustion engine. This N02 increase supports the natural regeneration of the DPF. Natural regeneration is also called "passive regeneration" because it is operated at low temperatures without artificially increasing the temperature of the ATS by means of fuel after-injection strategies or through the dosing of fuel directly into the exhaust pipe or by means of the activation of suitable heaters. This is one of the advantages of placing the DPF upstream of the NSC. According to a preferred strategy to control the fuel injector in the exhaust pipe, the following steps are carried out:
- switching said valve (FP, FP') so as to cause said recirculation of gas passing through said first treatment portion; in other words, allowing said second exhaust gas fraction to bypass the ATS1,
- adjusting the fuel dosing so as to obtain a total lambda at the inlet of the first treatment portion slightly above 1, namely ranging from 1.01 to 1.2,
- adjusting the fuel dosing by means of said dosing device J (J1, J2) so as to obtain a total lambda at the inlet of the first treatment portion slightly below 1, namely ranging from 0.8 to 0.99.

This fact allows for a preventive regeneration of the DPF, which needs oxygen to burn the stored particulate matter, and in the meantime the temperature of the ATS1 is gradually increased.

Subsequently, the NSC is regenerated (or the PNA is emptied) with the injection of fuel, so as to reduce the presence of oxygen to zero. Then, the aforesaid valve is switched again, thus disabling the bypass duct.

The third core E3, when present, is preferably defined by a passive SCR - pSCR - which can operate autonomously, namely without the dedicated injection of a urea-based reducing agent, since the ammonia to be stored in its represents one of the regeneration products of the NSC arranged upstream of the SCR. For this reason, the injector JAB is not present.

Advantageously, a tank of urea-based reducing agent does not need to be installed on board the vehicle.

The third configuration **V3** includes an NSC (E1) followed by a DPF (E2), i.e. a core that only has the power to filter the carbon-containing particulate matter and does not have any charge, namely does not have catalytic power. The third core is an active SCR and, therefore, is indicated with a-SCR; hence, the nozzle/dosing device JAB becomes essential. Generally speaking, when an SCR is indicated, it is meant to be active, in the sense that the urea-based reducing agent injector JAB is present; otherwise it is always called passive SCR or indicated with pSCR.

Evidently, in this case, the particulate matter trap is arranged downstream of the NSC and, therefore, the natural regeneration of the filtering part of the DFP cannot be exploited in the absence of N02. This implies that a given number or regenerations of the NSC must be properly prolonged in order to also allow for the regeneration of the DPF.

The fourth configuration **V4** includes an NSC (E1) followed by an SCRoF (E2), which means a core with the power to filter the carbon-containing particulate matter and, at the same time, loaded so as to also define an SCR catalyst, followed by an SCR (E3). Since, also in this variant, there is a urea-based reducing agent injector JAB, both the SCRoF and the SCR are active and, therefore, indicated with a-SCRoF and a-SCR, respectively.

The presence of a small-sized a-SCR core following the one of the a-SCRoF allows for a complete use of the ammonia and, hence, for a high efficiency of the NOx abatement process. Evidently, also in this case, the particulate matter trap is arranged downstream of the NSC and, therefore, the natural regeneration of the filtering part of the DFP cannot be exploited in the absence of N02.

The variants from the first one V1 to the fourth one V4 can be implemented as law requirements become stricter and stricter.

According to variants **V2** - **V4,** the NSC can advantageously be regenerated short before the turning off of the engine E, when this is foreseeable. This fact allows the NH3 produced by the regeneration to be stored in the SCR or pSCR and preserved until the next starting of the engine. In case of cold start, the previous storing of NH3 in the SCR cooperates with the restored full capacity of the NSC to convert and trap NOx produced by the engine E.

According to a preferred implementation of configurations V2 - V4, when the ATS is cold as a whole, upon starting the engine, the first valve FB is kept open in said first operating condition so as to ensure a quick heating of the DOC, exploiting the fact that regulations currently enforced do not take into account the pollutants released into the atmosphere during the first engine starting phases.

It is known that engine calibration, namely fuel injection maps and the relative advance, can be properly changed. According to a preferred variant of the invention, during NSC regeneration procedures (variants V2 - V4), the calibration of the engine is changed taking into account the fuel introduced into the exhaust pipe through said dosing device or through said after-injections as well as the relative total reforming inside the NSC, so as to minimize the production of NOx.

This calibration can change the quantity of fuel injected into the cylinders so as to be delivered to the internal combustion engine.

It should be mentioned that the first portion of the ATS can comprise both an NSC and a catalytic DPF arranged upstream of the NSC (configuration **V2**) or an SCRoF arranged downstream of the NSC (configuration **V3/V4**) with a relative urea-based reducing agent dosing device associated with the first dome, preferably at the centre, so as to inject said agent into the exhaust gas directed towards the central pipe.

When the configuration **V2** is implemented, according to a preferred ATS control strategy, before starting the regeneration/emptying of the NOx trap (NSC/PNA), at first the aforesaid valve downstream of the first ATS portion is switched, thus enabling the bypass pipe, and then the relative dosing device is controlled so as to obtain a total lambda at the inlet of the first ATS portion slightly above 1, namely ranging from 1.01 to 1.2. This allows for a temperature increase and, hence, for the regeneration of the DPF, as residual oxygen is necessary for the combustion of the particulate matter stored in the DPF. After this step, the relative dosing device is controlled so as to obtain a total lambda at the inlet of the first ATS portion slightly below 1, namely ranging from 0.8 to 0.99. This allows for the desorption of N02 stored in the NSC and for the direct reduction thereof with hydrocarbons as reducing agent. At the end of the regeneration, the valve is switched again, thus disabling the bypass duct.

The fact of carrying out the two regenerations in succession leads to the advantage of gradually increasing the temperature of the first ATS portion.

Preferably, the core of the DPF is coated with an oxidising treatment, for example a platinum-based one. During the normal operation of the ATS, the oxidising coating allows for the oxidation of NO to N02 contained in the exhaust gases produced by the internal combustion engine. This N02 increase supports the natural regeneration of the DPF. Natural regeneration is also called "passive regeneration" because it is operated at low temperatures without artificially increasing the temperature of the ATS by means of fuel after-injection strategies or through the dosing of fuel directly into the exhaust pipe or by means of the activation of suitable heaters. This is one of the advantages of arranging the DPF upstream of the NSC or, in the absence of the NSC, immediately downstream of the DOC. When, on the other hand, the first ATS portion comprises a so-called SCRoF (configuration **V3/V4**), the NSC is necessarily arranged upstream thereof, as its platinum content would oxidise the ammonia before it can react with the NOx inside the SCRoF. Therefore, the NSC is the first component, then there is the SCRoF and then a "normal" SCR, which acts in series with it exploiting the residual ammonia, which is not catalysed in the SCRoF.

According to any one of the variants described above, in which the device comprises an NSC, the recirculation pipe leading to the engine is preferably provided with an adjustment valve for the recirculated exhaust gas fraction. During the regeneration of the NSC and/or of the DPF filter, this valve adjusts the exhaust gas fraction flowing through the first portion of the ATS in a way that is functional to the regeneration of the components present in the first treatment portion ATS1, whereas in normal conditions it can adjust the recirculation of exhaust gas depending on a desired target of NOx produced by the internal combustion engine, thus acting like a known EGR device.

Therefore, whereas the valve downstream of the first ATS portion is an ON/OFF valve and a preferably two-way valve, the valve on the recirculation pipe is a flow adjusting valve.

In particular, during the regeneration, the flow adjusting valve allows the flowrate of the exhaust gas flow going through the first ATS portion to be adjusted, thus obtaining a space-velocity target value. In particular, it is configured to keep said flowrate constant, compensating a variation of the engine operation point. Therefore, the adjustment is carried out based on the regeneration of the components of the first ATS portion and not based on the NOx abatement.

The variants described above are particularly suitable for Diesel engines.

Figure 1a shows a third core E3 arranged between the first core E1 and the first dome D1.

Table 2 below reproduces table 1 taking unto account the arrangement shown in figure 1a:

**Table 2**

| | **V1** | **V2'** | **V3/V3'** |
|---|---|---|---|
| J (J1, J2) | Yes/no | yes | Yes |
| JAB | - | **No/Yes** | yes |
| E1 | DOC | C-DPF | NSC |
| E3 | C-DPF | NSC | DPF/**C-**DPF |
| E2 | -/DPF | p-SCR/ **a-SCR** | a-SCR |
| ATS2 | -/DOC/CUC | DOC/CUC | DOC/CUC |

The content of the table remains substantially unchanged if E3 takes the place of E2, since in figure 7 the sequence is E1-E2-E3, whereas in figure 8 the sequence is E1-E3-E2.

The crucial advantage of the solution of figure 8 lies in the fact that the third core does not cooperate with the urea-based reducing agent injected by the injector JAB. This makes it possible to have, as second core flown through by the exhaust gas flow, i.e. E3, a c-DPF filter upstream of the injector JAB (see **V3'**), namely an oxidising filter, which, besides having the power to filter the carbon-containing particulate matter, is also loaded so as to define an oxidising catalyst. If, on the contrary, it were arranged downstream of the injector JAB, it would eliminate the urea-based reducing agent injected by the latter, thus preventing a possible a-SCR arranged further downstream from working.

Configuration V4 is not present, since, according to the implementation of figure 1a, the s-SCRoF would be upstream of the urea-based reducing agent injector JAB.

Furthermore, configuration V2 is slightly changed and, hence, indicated with **V2',** as a urea-based reducing agent injector JAB can be present, thus turning the passive SCR (p-SCR) into an active SCR (a-SCR). In this case, the difference between configurations V2 and V3 lies in the order between DPF and NSC.

A further preferred variant, useful in case the ATS1 is the only one present in the system, includes a further core E4, for example a CUC, arranged immediately before the outlet OUT.

It should be taken into account that upstream of the first point where the bypass duct BP is connected there can be a further EGR recirculation pipe EGR independent of the pipe/s EGRP. In figure 2 said EGR recirculation pipe is arranged upstream of the turbocharger assembly T, C, but it can also be arranged downstream of the assembly T, C. Similarly, an EGR recirculation pipe can be arranged downstream of the above-mentioned point, thus obtaining a "medium"-pressure or "low"-pressure recirculation device, in relation of the presence or absence of the ATS2, respectively.

The possible EGR pipe can be provided with a possible relative cooler.

According to a preferred implementation of the invention, the management of the operation of the ATS is assigned to the ECU (engine control unit), which controls the operation of the internal combustion engine.

In particular, the ECU is configured to operate said first and second operating conditions and is configured to
- control said fuel dosing means, regardless of whether they are obtained by means of after-injections or by means of injectors/nozzles J (J1, J2) arranged along the exhaust pipe,
- control the calibration of a fuel injection in at least a cylinder of the internal combustion engine in said second operating condition, taking into account the recirculated compounds. Furthermore, if the engine E comprises an adjustable valve lift device, generally indicated with VVA, the ECU can also control the opening angles of the valves, thus creating, for example, an inner EGR during the regeneration phase, so as to minimize the production of NOx, especially when a bypass duct is implemented, which is not provided with abatement devices, like it is shown in figures 2 - 4.

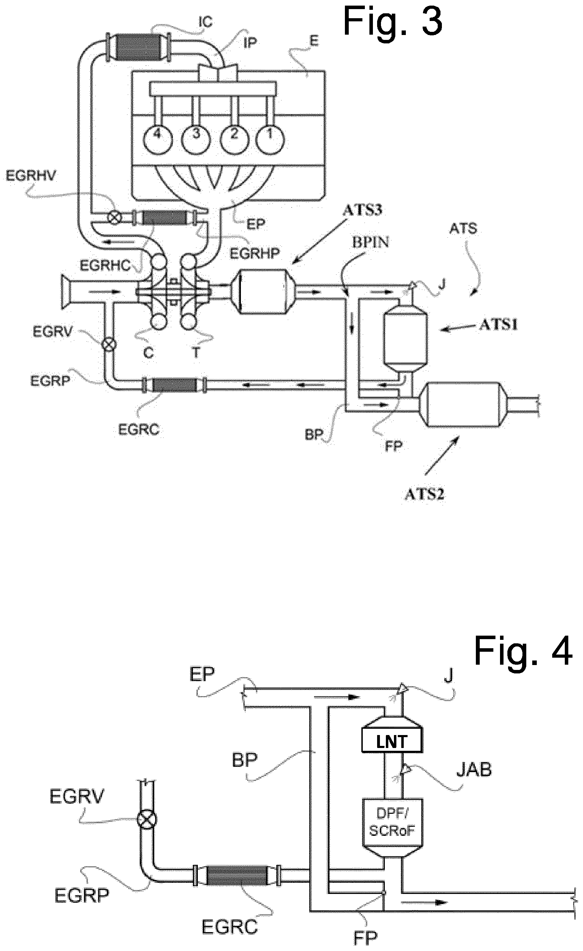

Figure 4, compared to figure 2, shows the presence of a so-called "donor cylinder". It permits the creation of a high-pressure EGR, recirculating the entire exhaust gas of the donor cylinder in the remaining cylinders. The intake manifold of the donor cylinder is connected to a first point of the intake pipe upstream of the connection of the remaining cylinders, so as to suck entirely fresh air. The exhaust manifold of the donor cylinder is connected to the intake pipe of the internal combustion engine in a second point downstream of said first point, in particular between said first point and the connection point of the remaining cylinders, so as to create a high-pressure EGR with a predetermined ratio, for example 25% with 4 cylinders. The presence of a donor cylinder is very useful for the purpose if this invention because it helps control the aforesaid adjusting valve with a greater freedom during the regeneration of the first ATS portion, thus developing a synergy with the latter. In other words, thanks to the presence of the donor cylinder, the exhaust gas fraction flowing through the NSC can be limited to very small values. This allows for regenerations of the NSC to be performed with a small load of the engine.

According to a preferred aspect of the invention, the ECU unit can estimate regeneration products, such as HC, NH3 and others, and adjust the injection of fuel in the cylinders taking into account the contribution coming from the total recirculation of said regeneration products.

This invention can be advantageously implemented by means of a computer program comprising encoding means for carrying out one or more steps of the method, when the program is run on a computer. Means can be read by a computer and comprise a recorded message, said means can be read by a computer comprising program encoding means for carrying out one or more steps of the method, when the program is run on a computer.

The non-limiting example described above can be subjected to variations, without for this reason going beyond the scope of protection of the invention, which is defined by the appended claims. When reading the description above, a skilled person can carry out the subject-matter of the invention without introducing further manufacturing details. The elements and features contained in the different preferred embodiments, drawings included, can be combined with one another.

The information contained in the part concerning the state of art only serves the purpose of better understanding the invention and does not represent a declaration of existence of the items described.

## Claims

1. A system for the abatement of the pollutants produced by an internal combustion engine (E) having an intake pipe (IP) and an exhaust pipe (EP), the system comprising a device (ATS) for the abatement of the pollutants contained in the exhaust gases produced by the internal combustion engine, wherein said ATS device comprises
- at least a first exhaust gas treatment portion (ATS1) comprising a Diesel particulate filter (DPF, cDPF, SCRoF),
- a bypass duct (BP) adapted to bypass said first treatment portion and arranged for connecting a first point, upstream of the first treatment portion (ATS1), to a second point, downstream of the first treatment portion,
- a recirculation pipe (EGRP) which connects a third point, arranged between said first treatment portion (ATS1) and said second point, to the intake pipe (IP) of the internal combustion engine; wherein said ATS device further comprises
- a first valve (FP) arranged to be adapted for selectively causing
• a first operating condition, in which there is a transit of exhaust gas, that passes through said first treatment portion (ATS1) towards said second point, and, accordingly, at least a partial occlusion of said bypass duct
• a second operating condition, in which there is a transit of exhaust gas, that passes through said first treatment portion (ATS1) towards said recirculation pipe, and a consequent opening of said bypass duct,
the system being **characterised in that** said first valve is further arranged to be adapted for preventing the transit of exhaust gas that passes through said first treatment portion (ATS1) towards said second point.

2. The system according to claim 1, wherein said first valve is configured to choke and preferably to completely occlude said bypass duct in said first operating condition.

3. The system according to claims 1 or 2, further comprising fuel dosing means (J) adapted to introduce fuel into said first treatment portion,
wherein, when the internal combustion engine (E) is in operation, the system is configured to alternatively actuate
- said second operating condition, for the regeneration of the Diesel particulate filter (DPF), wherein said fuel dosing means (J) are in operation, introducing fuel into said first treatment portion,
- said first operating condition, wherein said fuel dosing means are closed.

4. The system according to any one of the previous claims 1 - 3, wherein said recirculation pipe (EGRP) comprises a second adjustment valve (EGRV) arranged so as to adjust an exhaust gas flowrate passing through said first treatment portion (ATS1) and recirculated towards the intake of the internal combustion engine during said second operating condition.

5. The system according to any one of the previous claims, wherein said first treatment portion further comprises a NOx trap (LNT) arranged upstream or downstream of said Diesel particulate filter.

6. The system according to claim 5, wherein, when said Diesel particulate filter is arranged upstream of the NOx trap (LNT), the system is configured to carry out the following steps in succession:
- switching said valve (FP) so as to cause said recirculation of gas passing through said first treatment portion,
- adjusting said fuel dosing means so as to obtain a total lambda at the inlet of the first treatment portion slightly above 1, namely ranging from 1.01 to 1.2, so as to obtain a regeneration of said Diesel particulate filter;
- adjusting said fuel dosing means so as to obtain a total lambda at the inlet of the first treatment portion slightly below 1, namely ranging from 0.8 to 0.99, so as to obtain a regeneration of said NOX trap.

7. The system according to claim 5, wherein, when said Diesel particulate filter is arranged downstream of the NOx trap, the system is configured to carry out the following steps in succession:
- switching said valve (FP) so as to cause said recirculation of gas passing through said first treatment portion,
- adjusting said fuel dosing means so as to obtain a total lambda at the inlet of the first treatment portion slightly below 1, namely ranging from 0.8 to 0.99, so as to cause a regeneration of said NOX trap;
- adjusting said fuel dosing means so as to obtain a total lambda at the inlet of the first treatment portion slightly above 1, namely ranging from 1.01 to 1.2, so as to obtain a regeneration of said Diesel particulate filter.

8. The system according to any one of the previous claims from 1 to 7, wherein said ATS further comprises a second treatment portion (ATS2) arranged downstream of said second point.

9. The system according to claim 8, when dependent on any one of claims 5 to 7,wherein said second treatment portion comprises, in succession, a DOC, a Diesel particulate filter, an NOx conversion device, and wherein the system is configured to keep
- said first valve (FP) in said second operating condition and
- said second valve (EGRV) closed,
when, after an emptying/regeneration of said NOx trap (LNT), said NOx conversion device reaches a relative activation temperature (light on), so as to completely insulate said NOx trap.

10. The system according to claim 8, wherein said second treatment portion comprises at least a NOx conversion device (SCR).

11. The system according to claim 10, when dependent on any one of claims 5 to 7, wherein the system is configured to keep said first valve in said first operating condition when, after an emptying/regeneration of said NOx trap (LNT), said NOx conversion device reaches an activation temperature.

12. The system according to any one of the previous claims from 1 to 11, further comprising a third treatment portion (ATS3) comprising a DOC and/or a Diesel particulate filter, preferably an oxidizer-loaded Diesel particulate filter (platinum-loaded DPF), and arranged upstream of said first point.

13. The system according to claim 10 or 11, when dependent on any one of claims 5 to 7, wherein the system is configured to keep
- said first valve (FP) in said second operating condition and
- said second valve (EGRV) closed,
when, after an emptying/regeneration of said NOx trap, said NOx conversion device reaches a relative activation temperature, so as to completely isolate said NOx trap (LNT).

14. The system according to claim 5, wherein said NOx trap (LNT) is an NSC, and wherein said first treatment portion (ATS1) also includes a passive SCR (pSCR) arranged downstream of said NSC so as to neutralize NOx passing through and/or released by said NSC by means of ammonia produced by said NSC.

15. The system according to claim 5, wherein said first treatment portion is divided into two distinct cannings, wherein said NOx trap is arranged in a first canning proximal to said first point and at least an active SCR is arranged in a second canning proximal to said second point, and wherein between said first and second canning there are means to inject a urea-based reducing agent into the exhaust gas flow flowing through said first treatment portion (ATS1).

16. The system according to any one of the previous claims 1 - 14, wherein said first treatment portion (ATS1, ATS1') comprises a single canning (CN) having an axially development with opposite bases closed by means of a first dome (D1) and a second dome (D2) respectively, wherein said device comprises at least a first core (E1) and a second core (E2) arranged transversally with respect to an axis (X) of said axial development and axially separated by a separation wall (SW), wherein an inlet chamber (CIN) is defined between said first core (E1) and said separation wall, and wherein the device comprises an inlet opening for exhaust gases arranged laterally and in communication with said inlet chamber, wherein the device comprises an outlet for said exhaust gases associated with said second dome and a central pipe (CP) arranged so as to place a first volume (CD1), defined in the first dome, directly in communication with said second core (E2).

17. The system according to claim 16, wherein said central pipe (CP) passes through said inlet chamber (CIN) and said side inlet is radially or tangentially oriented or may have an intermediate inclination between tangential and radial, allowing for an improved filling of the inlet chamber, creating a circumferential flow around a central pipe portion arranged in the inlet chamber.

18. The system according to claim 17, wherein said central pipe portion comprises an external finning (WE) allowing for an improved heat acquisition from an exhausted gas that enters the inlet chamber.

19. The system according to claim 18, wherein said second core consists of an active SCR and wherein a second dosing device (JAB) for a urea-based reducing agent is placed in said first dome, adapted to inject said agent into an exhaust gas flow which reaches said first volume (CD1) from said inlet chamber and from said first volume is conveyed towards said second core through said central pipe (CP).

20. The system according to any one of the previous claims 16 - 19, further comprising a third core arranged between said second core (E2) and said second dome (D2) and wherein said first core (E1) or said second core (E2) consists of an NSC.

21. The system according to any one of the previous claims from 16 to 18, further comprising a third core arranged between said first core and said first dome (D1) and wherein said first core (E1) or said third core (E3) consists of an NSC.

22. The system according to any one of the previous claims, further comprising a first fuel dosing device (J (J1, J2)) associated with an inlet pipe (PIN) connected in operation to said inlet opening (IN).

23. The system according to claim 20, wherein (V3) said first core (E1) consists of said NSC, said second core consists of a DPF filter having only a filtering capacity, said third core (E3) consists of an active SCR (a-SCR) coupled to a second dosing device (JAB) for a urea-based reducing agent associated with said first dome (D1), adapted to inject a urea-based reducing agent into said exhaust gas flow.

24. The system according to claim 20, wherein (V4) said first core (E1) consists of said NSC, said second core consists of an active SCRoF (a-SCRoF) and said third core (E3) consists of an active SCR (a-SCR), wherein the second and third core are connected to a second dosing device (JAB) for a urea-based reducing agent associated with said first dome (D1) and adapted to inject a urea-based reducing agent into said exhaust gas flow.

25. An internal combustion engine having an intake pipe (IP) and an exhaust pipe (EP) and **characterized in that** it has a system for the abatement of relative pollutants (ATS) according to any one of the previous claims 1 - 24.

26. A vehicle comprising an internal combustion engine (E) and a pollutants abatement system (ATS) according to any one of the claims from 1 to 24.

## Patentansprüche

1. System zur Minderung der Schadstoffe, die durch eine Brennkraftmaschine (E), die eine Einlassleitung (IP) und eine Auslassleitung (EP) besitzt, erzeugt werden, wobei das System eine Vorrichtung (ATS) zur Minderung der Schadstoffe, die in den Abgasen, die durch die Brennkraftmaschine erzeugt werden, enthalten sind, umfasst und die ATS-Vorrichtung Folgendes umfasst:
- mindestens einen ersten Abgasbehandlungsabschnitt (ATS1), der einen Dieselpartikelfilter (DPF, cDPF, SCRoF) umfasst,
- einen Umgehungskanal (BP), der ausgelegt ist, den ersten Behandlungsabschnitt zu umgehen, und derart angeordnet ist, dass er einen ersten Punkt stromaufwärts des ersten Behandlungsabschnitts (ATS1) mit einem zweiten Punkt stromabwärts des ersten Behandlungsabschnitts verbindet, und
- eine Rückführungsleitung (AGRP), die einen dritten Punkt, der zwischen dem ersten Behandlungsabschnitt (ATS1) und dem zweiten Punkt angeordnet ist, mit der Einlassleitung (IP) der Brennkraftmaschine verbindet; wobei
die ATS-Vorrichtung ferner Folgendes umfasst:
- ein erstes Ventil (FP), das derart angeordnet ist, dass es ausgelegt ist zum wahlweisen Auslösen
• eines ersten Betriebszustands, in dem ein Durchleiten von Abgas, das den ersten Behandlungsabschnitt (ATS1) zum zweiten Punkt durchströmt, und entsprechend mindestens ein teilweiser Verschluss des Umgehungskanals vorliegen, oder
• eines zweiten Betriebszustands, in dem ein Durchleiten von Abgas, das den ersten Behandlungsabschnitt (ATS1) zur Rückführungsleitung durchströmt, und ein folgliches Öffnen des Umgehungskanals vorliegen, wobei
das System **dadurch gekennzeichnet ist, dass** das erste Ventil ferner derart angeordnet ist, dass es ausgelegt ist zum Verhindern des Durchleitens von Abgas, das den ersten Behandlungsabschnitt (ATS1) durchströmt, zum zweiten Punkt.

2. System nach Anspruch 1, wobei das erste Ventil konfiguriert ist, den Umgehungskanal im ersten Betriebszustand zu drosseln und bevorzugt vollständig zu verschließen.

3. System nach Anspruch 1 oder 2, das ferner Kraftstoffdosiermittel (J) umfasst, die ausgelegt sind, Kraftstoff in den ersten Behandlungsabschnitt einzuleiten, wobei
das System konfiguriert ist, dann, wenn die Brennkraftmaschine (E) in Betrieb ist, alternativ Folgendes auszulösen:
- den zweiten Betriebszustand zur Regeneration des Dieselpartikelfilters (DPF), wobei die Kraftstoffdosiermittel (J) in Betrieb sind und Kraftstoff in den ersten Behandlungsabschnitt einleiten, oder
- den ersten Betriebszustand, in dem die Kraftstoffdosiermittel geschlossen sind.

4. System nach einem der vorhergehenden Ansprüche 1-3, wobei die Rückführungsleitung (AGRP) ein zweites Einstellventil (AGRV) umfasst, das derart angeordnet ist, dass es während des zweiten Betriebszustands eine Abgasdurchflussmenge, die den ersten Behandlungsabschnitt (ATS1) durchströmt und zum Einlass der Brennkraftmaschine wieder in Umlauf gebracht wird, anpasst.

5. System nach einem der vorhergehenden Ansprüche, wobei der erste Behandlungsabschnitt ferner einen NOx-Abscheider (LNT) umfasst, der stromaufwärts oder stromabwärts des Dieselpartikelfilters angeordnet ist.

6. System nach Anspruch 5, wobei dann, wenn der Dieselpartikelfilter stromaufwärts des NOx-Abscheiders (LNT) angeordnet ist, das System konfiguriert ist, die folgenden Schritte nacheinander auszuführen:
- Schalten des Ventils (FP), um die Rückführung von Gas, das den ersten Behandlungsabschnitt durchströmt, zu verursachen,
- Anpassen der Kraftstoffdosiermittel, um ein Gesamtlambda beim Einlass des ersten Behandlungsabschnitts etwas oberhalb von 1, nämlich im Bereich von 1,01 bis 1,2 zu erreichen, um eine Regeneration des Dieselpartikelfilters zu erreichen; und
- Anpassen der Kraftstoffdosiermittel, um ein Gesamtlambda beim Einlass des ersten Behandlungsabschnitts etwas unterhalb von 1, nämlich im Bereich von 0,8 bis 0,99 zu erreichen, um eine Regeneration des NOX-Abscheiders zu erreichen.

7. System nach Anspruch 5, wobei dann, wenn der Dieselpartikelfilter stromabwärts des NOx-Abscheiders angeordnet ist, das System konfiguriert ist, die folgenden Schritte nacheinander auszuführen:
- Schalten des Ventils (FP), um die Rückführung von Gas, das den erste Behandlungsabschnitt durchströmt, zu verursachen,
- Anpassen der Kraftstoffdosiermittel, um ein Gesamtlambda beim Einlass des ersten Behandlungsabschnitts etwas unterhalb von 1, nämlich im Bereich von 0,8 bis 0,99 zu erreichen, um eine Regeneration des NOX-Abscheiders zu erreichen; und
- Anpassen der Kraftstoffdosiermittel, um ein Gesamtlambda beim Einlass des ersten Behandlungsabschnitts etwas oberhalb von 1, nämlich im Bereich von 1,01 bis 1,2 zu erreichen, um eine Regeneration des Dieselpartikelfilters zu erreichen.

8. System nach einem der vorhergehenden Ansprüche 1 bis 7, wobei das ATS ferner einen zweiten Behandlungsabschnitt (ATS2) umfasst, der stromabwärts des zweiten Punkts angeordnet ist.

9. System nach Anspruch 8, wenn abhängig von einem der Ansprüche 5 bis 7, wobei der zweite Behandlungsabschnitt nacheinander einen DOC, einen Dieselpartikelfilter und eine NOx-Umwandlungsvorrichtung umfasst und das System konfiguriert ist zum Halten
- des ersten Ventils (FP) im zweiten Betriebszustand und
- des zweiten Ventils (AGRV) geschlossen,
wenn nach einem Leeren/Regenerieren des NOx-Abscheiders (LNT) die NOx-Umwandlungsvorrichtung eine relative Aktivierungstemperatur (Licht an) erreicht, um den NOx-Abscheider vollständig zu isolieren.

10. System nach Anspruch 8, wobei der zweite Behandlungsabschnitt mindestens eine NOx-Umwandlungsvorrichtung (SCR) umfasst.

11. System nach Anspruch 10, wenn abhängig von einem der Ansprüche 5 bis 7, wobei das System konfiguriert ist, das erste Ventil im ersten Betriebszustand zu halten, wenn nach einem Leeren/Regenerieren des NOx-Abscheiders (LNT) die NOx-Umwandlungsvorrichtung eine Aktivierungstemperatur erreicht.

12. System nach einem der vorhergehenden Ansprüche 1 bis 11, das ferner einen dritten Behandlungsabschnitt (ATS3) umfasst, der einen DOC und/oder einen Dieselpartikelfilter, bevorzugt einen oxidationsmittelgeladenen Dieselpartikelfilter (einen platingeladenen DPF) umfasst und stromaufwärts des ersten Punkts angeordnet ist.

13. System nach Anspruch 10 oder 11, wenn abhängig von einem der Ansprüche 5 bis 7, wobei das System konfiguriert ist zum Halten
- des ersten Ventils (FP) im zweiten Betriebszustand und
- des zweiten Ventils (AGRV) geschlossen,
wenn nach einem Leeren/Regenerieren des NOx-Abscheiders die NOx-Umwandlungsvorrichtung eine relative Aktivierungstemperatur erreicht, um den NOx-Abscheider (LNT) vollständig zu isolieren.

14. System nach Anspruch 5, wobei der NOx-Abscheider (LNT) ein NSC ist und der erste Behandlungsabschnitt (ATS1) auch eine passive SCR (pSCR) enthält, die stromabwärts des NSC angeordnet ist, um NOx, das den NSC durchströmt und/oder durch den NSC freigegeben wird, mittels Ammoniak, das durch den NSC erzeugt wird, zu neutralisieren.

15. System nach Anspruch 5, wobei der erste Behandlungsabschnitt in zwei verschiedene Einbettungen unterteilt ist, wobei der NOx-Abscheider in einer ersten Einbettung nahe dem ersten Punkt angeordnet ist und mindestens eine aktive SCR in einer zweiten Einbettung nahe dem zweiten Punkt angeordnet ist und wobei zwischen der ersten und der zweiten Einbettung Mittel vorhanden sind, um ein harnstoffbasiertes Reduktionsmittel in den Abgasstrom, der durch den ersten Behandlungsabschnitt (ATS1) strömt, einzuspritzen.

16. System nach einem der vorhergehenden Ansprüche 1-14, wobei der erste Behandlungsabschnitt (ATS1, ATS1') eine einzelne Einbettung (CN) umfasst, die eine axiale Entwicklung mit gegenüberliegenden Basen, die mittels einer erste Kuppel (D1) bzw. einer zweite Kuppel (D2) geschlossen ist, besitzt, die Vorrichtung mindestens einen ersten Kern (E1) und einen zweiten Kern (E2), die quer in Bezug auf eine Achse (X) der axialen Entwicklung und durch eine Trennwand (SW) axial getrennt angeordnet sind, umfasst, eine Einlasskammer (CIN) zwischen dem ersten Kern (E1) und der Trennwand definiert ist und die Vorrichtung eine Einlassöffnung für Abgase, die seitlich und in Kommunikation mit dem Einlasskammer angeordnet ist, umfasst, wobei die Vorrichtung einen Auslass für die Abgase, der der zweiten Kuppel zugeordnet ist, und eine zentrale Leitung (CP), die derart angeordnet ist, dass sie ein erstes Volumen (CD1), das in der ersten Kuppel definiert ist, direkt in Kommunikation mit dem zweiten Kern (E2) anbringt, umfasst.

17. System nach Anspruch 16, wobei die zentrale Leitung (CP) die Einlasskammer (CIN) durchläuft und der Seiteneinlass radial oder tangential orientiert ist oder eine Zwischenneigung zwischen tangential und radial besitzen kann, die ein verbessertes Füllen der Einlasskammer ermöglicht, wodurch ein Umfangsstrom um einen zentralen Leitungsabschnitt, der in der Einlasskammer angeordnet ist, erzeugt wird.

18. System nach Anspruch 17, wobei der zentrale Leitungsabschnitt eine Außenverrippung (WE) umfasst, die eine verbesserte Wärmeaufnahme von einem Abgas, das in die Einlasskammer eintritt, ermöglicht.

19. System nach Anspruch 18, wobei der zweite Kern aus einer aktiven SCR besteht und eine zweite Dosiervorrichtung (JAB) für ein harnstoffbasiertes Reduktionsmittel, die ausgelegt ist, das Mittel in einen Abgasstrom, der das erste Volumen (CD1) aus der Einlasskammer erreicht und aus dem ersten Volumen über die zentrale Leitung (CP) zum zweiten Kern transportiert wird, einzuspritzen, in der ersten Kuppel angeordnet ist.

20. System nach einem der vorhergehenden Ansprüche 16-19, das ferner einen dritten Kern umfasst, der zwischen dem zweiten Kern (E2) und der zweiten Kuppel (D2) angeordnet ist, wobei der erste Kern (E1) oder der zweite Kern (E2) aus einem NSC besteht.

21. System nach einem der vorhergehenden Ansprüche 16 bis 18, das ferner einen dritter Kern umfasst, der zwischen dem ersten Kern und der ersten Kuppel (D1) angeordnet ist, wobei der erste Kern (E1) oder der dritte Kern (E3) aus einem NSC besteht.

22. System nach einem der vorhergehenden Ansprüche, das ferner eine erste Kraftstoffdosiervorrichtung (J (J1, J2)) umfasst, die einer Einlassleitung (PIN) zugeordnet ist und im Betrieb mit der Einlassöffnung (IN) verbunden ist.

23. System nach Anspruch 20, wobei (V3) der erste Kern (E1) aus dem NSC besteht, der zweite Kern aus einem DPF-Filter besteht, der lediglich eine Filterkapazität besitzt, der dritte Kern (E3) aus einer aktiven SCR (a-SCR) besteht, die an eine zweite Dosiervorrichtung (JAB) für ein harnstoffbasiertes Reduktionsmittel, die der ersten Kuppel (D1) zugeordnet ist und ausgelegt ist, ein harnstoffbasiertes Reduktionsmittel in den Abgasstrom einzuspritzen, gekoppelt ist.

24. System nach Anspruch 20, wobei (V4) der erste Kern (E1) aus dem NSC besteht, der zweite Kern aus einem aktiven SCRoF (a-SCRoF) besteht und der dritte Kern (E3) aus einem aktiven SCR (a-SCR) besteht, wobei der zweite und der dritte Kern mit einer zweiten Dosiervorrichtung (JAB) für ein harnstoffbasiertes Reduktionsmittel, die der ersten Kuppel (D1) zugeordnet ist und ausgelegt ist, ein harnstoffbasiertes Reduktionsmittel in den Abgasstrom einzuspritzen, verbunden sind.

25. Brennkraftmaschine, die eine Einlassleitung (IP) und eine Auslassleitung (EP) besitzt und **dadurch gekennzeichnet ist, dass** sie ein System für die Minderung von jeweiligen Schadstoffen (ATS) nach einem der vorhergehenden Ansprüche 1-24 besitzt.

26. Fahrzeug, das eine Brennkraftmaschine (E) und ein Schadstoffminderungssystem (ATS) nach einem der Ansprüche 1 bis 24 umfasst.

## Revendications

1. Système pour la réduction des polluants produits par un moteur à combustion interne (E) ayant un tuyau d'admission (IP) et un tuyau d'échappement (EP), le système comprenant un dispositif (ATS) pour la réduction des polluants contenus dans les gaz d'échappement produits par le moteur à combustion interne, dans lequel ledit dispositif ATS comprend :
au moins une première partie de traitement de gaz d'échappement (ATS1) comprenant un filtre à particules diesel (DPF, cDPF, SCRoF),
un conduit de dérivation (BP) adapté pour dériver ladite première partie de traitement et agencé pour raccorder un premier point, en amont de la première partie de traitement (ATS1), à un deuxième point, en aval de la première partie de traitement,
un tuyau de recirculation (EGRP) qui raccorde un troisième point, agencé entre ladite première partie de traitement (ATS1) et ledit deuxième point, au tuyau d'admission (IP) du moteur à combustion interne ;
dans lequel ledit dispositif ATS comprend en outre :
une première soupape (FP) agencée pour être adaptée pour provoquer sélectivement :
une première condition de fonctionnement, dans laquelle il existe un transit de gaz d'échappement, qui passe à travers ladite première partie de traitement (ATS1) vers ledit deuxième point et par conséquent au moins une occlusion partielle dudit conduit de dérivation,
une deuxième condition de fonctionnement, dans laquelle il existe un transit de gaz d'échappement, qui passe à travers ladite première partie de traitement (ATS1) vers ledit tuyau de recirculation, et une ouverture résultante dudit conduit de dérivation,
le système étant **caractérisé en ce que** ladite première soupape est en outre agencée pour être adaptée afin d'empêcher le transit de gaz d'échappement qui passe à travers ladite première partie de traitement (ATS1) vers ledit deuxième point.

2. Système selon la revendication 1, dans lequel ladite première soupape est configurée pour étrangler et de préférence pour boucher complètement ledit conduit de dérivation dans ladite première condition de fonctionnement.

3. Système selon les revendications 1 ou 2, comprenant en outre des moyens de dosage de combustible (J) adaptés pour introduire le combustible dans ladite première partie de traitement,
dans lequel, lorsque le moteur à combustion interne (E) est en fonctionnement, le système est configuré pour actionner, de manière alternée :
ladite deuxième condition de fonctionnement, pour la régénération du filtre à particules diesel (DPF), dans laquelle lesdits moyens de dosage de combustible (J) sont en fonctionnement, introduisant le combustible dans ladite première partie de traitement,
ladite première condition de fonctionnement, dans laquelle lesdits moyens de dosage de combustible sont fermés.

4. Système selon l'une quelconque des revendications 1 à 3, dans lequel ledit tuyau de recirculation (EGRP) comprend une deuxième soupape d'ajustement (EGRV) agencée pour ajuster un débit de gaz d'échappement passant par ladite première partie de traitement (ATS1) et les faire recirculer vers l'admission du moteur à combustion interne pendant ladite deuxième condition de fonctionnement.

5. Système selon l'une quelconque des revendications précédentes, dans lequel ladite première partie de traitement comprend en outre un piège à NOx (LNT) agencé en amont ou en aval dudit filtre à particules diesel.

6. Système selon la revendication 5, dans lequel lorsque ledit filtre à particules diesel est agencé en amont du piège à NOx (LNT), le système est configuré pour réaliser les étapes suivantes en succession :
commuter ladite soupape (FP) afin de provoquer ladite recirculation du gaz passant par ladite première partie de traitement,
ajuster lesdits moyens de dosage de combustible pour obtenir un lambda total à l'entrée de la première partie de traitement légèrement supérieur à 1, c'est-à-dire de 1,01 à 1,2, afin d'obtenir une régénération dudit filtre à particules diesel ;
ajuster lesdits moyens de dosage de combustible afin d'obtenir un lambda total à l'entrée de la première partie de traitement légèrement inférieur à 1, c'est-à-dire de 0,8 à 0,99, afin d'obtenir une régénération dudit piège à NOX.

7. Système selon la revendication 5, dans lequel, lorsque le filtre à particules diesel est agencé en aval du piège à NOx, le système est configuré pour réaliser les étapes suivantes en succession :
commuter ladite soupape (FP) afin de provoquer ladite recirculation du gaz passant par ladite première partie de traitement,
ajuster lesdits moyens de dosage de combustible afin d'obtenir un lambda total à l'entrée de la première partie de traitement légèrement inférieur à 1, c'est-à-dire de 0,8 à 0,99, afin de provoquer une régénération dudit piège à NOx ;
ajuster lesdits moyens de dosage de combustible afin d'obtenir un lambda total à l'entrée de la première partie de traitement légèrement supérieur à 1, c'est-à-dire de 1,01 à 1,2, afin d'obtenir une régénération dudit filtre à particules diesel.

8. Système selon l'une quelconque des revendications 1 à 7, dans lequel ledit ATS comprend en outre une deuxième partie de traitement (ATS2) agencée en aval dudit deuxième point.

9. Système selon la revendication 8, lorsqu'elle dépend de l'une quelconque des revendications 5 à 7, dans lequel ladite deuxième partie de traitement comprend, en succession, un DOC, un filtre à particules diesel, un dispositif de conversion de NOx, et dans lequel le système est configuré pour maintenir :
ladite première soupape (FP) dans ladite deuxième condition de fonctionnement, et
ladite deuxième soupape (EGRV) fermée,
lorsque, après un vidage/régénération dudit piège à NOx (LNT), ledit dispositif de conversion de NOx atteint une température d'activation relative (lampe allumée), afin d'isoler complètement ledit piège à NOx.

10. Système selon la revendication 8, dans lequel ladite deuxième partie de traitement comprend au moins un dispositif de conversion de NOx (SCR).

11. Système selon la revendication 10, lorsqu'elle dépend de l'une quelconque des revendications 5 à 7, dans lequel le système est configuré pour maintenir ladite première soupape dans ladite première condition de fonctionnement lorsque, après un vidage/régénération dudit piège à NOx (LNT), ledit dispositif de conversion de NOx atteint une température d'activation.

12. Système selon l'une quelconque des revendications 1 à 11, comprenant en outre une troisième partie de traitement (ATS3) comprenant un DOC et/ou un filtre à particules diesel, de préférence un filtre à particules diesel chargé en oxydant (DPF chargé en platine) et agencée en amont dudit premier point.

13. Système selon la revendication 10 ou 11, lorsqu'elle dépend de l'une quelconque des revendications 5 à 7, dans lequel le système est configuré pour maintenir :
ladite première soupape (FP) dans ladite deuxième condition de fonctionnement, et
ladite deuxième soupape (EGRV) fermée,
lorsque, après un vidage/régénération dudit piège à NOx, ledit dispositif de conversion de NOx atteint une température d'activation relative, afin de complètement isoler ledit piège à NOx (LNT).

14. Système selon la revendication 5, dans lequel ledit piège à NOx (LNT) est un NSC, et dans lequel ladite première partie de traitement (ATS1) comprend également un SCR passif (pSCR) agencé en aval dudit NSC afin de neutraliser les NOx qui passent par et/ou sont libérés par ledit NSC au moyen d'ammoniac produit par ledit NSC.

15. Système selon la revendication 5, dans lequel ladite première partie de traitement est divisée en deux gainages distincts, dans lequel ledit piège à NOx est agencé dans un premier gainage à proximité dudit premier point et au moins un SCR actif est agencé dans un deuxième gainage à proximité dudit deuxième point, et dans lequel entre lesdits premier et deuxième gainages, il y a des moyens pour injecter un agent de réduction à base d'urée dans l'écoulement de gaz d'échappement s'écoulant à travers ladite première partie de traitement (ATS1).

16. Système selon l'une quelconque des revendications 1 à 14, dans lequel ladite première partie de traitement (ATS1, ATS1') comprend un seul gainage (CN) ayant un développement axial avec des bases opposées fermées au moyen d'un premier dôme (D1) et d'un deuxième dôme (D2) respectivement, dans lequel ledit dispositif comprend au moins un premier noyau (E1) et un deuxième noyau (E2) agencés transversalement par rapport à un axe (X) dudit développement axial et axialement séparés par une paroi de séparation (SW), dans lequel une chambre d'entrée (CIN) est définie entre ledit premier noyau (E1) et ladite paroi de séparation, et dans lequel le dispositif comprend une ouverture d'entrée pour les gaz d'échappement agencée latéralement et en communication avec ladite chambre d'entrée, dans lequel le dispositif comprend une sortie pour lesdits gaz d'échappement associée avec ledit deuxième dôme et un tuyau central (CP) agencé afin de placer un premier volume (CD1) défini dans le premier dôme, directement en communication avec ledit deuxième noyau (E2).

17. Système selon la revendication 16, dans lequel ledit tuyau central (CP) passe à travers ladite chambre d'entrée (CIN) et ladite entrée latérale est orientée radialement ou de manière tangentielle ou peut avoir une inclinaison intermédiaire entre tangentielle et radiale, permettant un remplissage amélioré de la chambre d'entrée, créant un écoulement circonférentiel autour d'une partie de tuyau central agencée dans la chambre d'entrée.

18. Système selon la revendication 17, dans lequel ladite partie de tuyau central comprend une ailette externe (WE) permettant une acquisition thermique améliorée d'un gaz d'échappement qui entre dans la chambre d'entrée.

19. Système selon la revendication 18, dans lequel ledit deuxième noyau se compose d'un SCR actif et dans lequel un deuxième dispositif de dosage (JAB) pour un agent de réduction à base d'urée est placé dans ledit premier dôme, adapté pour injecter ledit agent dans un écoulement de gaz d'échappement qui atteint ledit premier volume (CD1) à partir de ladite chambre d'entrée et à partir dudit premier volume, est transporté vers ledit deuxième noyau en passant par ledit tuyau central (CP).

20. Système selon l'une quelconque des revendications 16 à 19, comprenant en outre un troisième noyau agencé entre ledit deuxième noyau (E2) et ledit deuxième dôme (D2) et dans lequel ledit premier noyau (E1) ou ledit deuxième noyau (E2) se compose d'un NSC.

21. Système selon l'une quelconque des revendications 16 à 18, comprenant en outre un troisième noyau agencé entre ledit premier noyau et ledit premier dôme (D1) et dans lequel ledit premier noyau (E1) ou ledit troisième noyau (E3) se compose d'un NSC.

22. Système selon l'une quelconque des revendications précédentes, comprenant en outre un premier dispositif de dosage de combustible (J (J1, J2)) associé à un tuyau d'entrée (PIN) raccordé, en fonctionnement, à ladite ouverture d'entrée (IN).

23. Système selon la revendication 20, dans lequel (V3) ledit premier noyau (E1) se compose dudit NSC, ledit deuxième noyau se compose d'un filtre DPF ayant uniquement une capacité de filtration, ledit troisième noyau (E3) se compose d'un SCR actif (a-SCR) couplé à un deuxième dispositif de dosage (JAB) pour un agent de réduction à base d'urée associé audit premier dôme (D1), adapté pour injecter un agent de réduction à base d'urée dans ledit écoulement de gaz d'échappement.

24. Système selon la revendication 20, dans lequel (V4) ledit premier noyau (E1) se compose dudit NSC, ledit deuxième noyau se compose d'un SCRoF actif (a-SCRoF) et ledit troisième noyau (E3) se compose d'un SCR actif (a-SCR), dans lequel les deuxième et troisième noyaux sont raccordés à un deuxième dispositif de dosage (JAB) pour un agent de réduction à base d'urée associé audit premier dôme (D1) et adapté pour injecter un agent de réduction à base d'urée dans ledit écoulement de gaz d'échappement.

25. Moteur à combustion interne ayant un tuyau d'admission (IP) et un tuyau d'échappement (EP) et **caractérisé en ce qu'**il a un système pour réduire des polluants (ATS) relatifs selon l'une quelconque des revendications 1 à 24.

26. Véhicule comprenant un moteur à combustion interne (E) et un système de réduction de polluants (ATS) selon l'une quelconque des revendications 1 à 24.
